# EUROPEAN PATENT APPLICATION

(11) **EP 2 594 864 A1**
(43) Date of publication of application: **22.05.2013**
(21) Application number: 12189374.7
(22) Date of filing: 22.10.2012
(51) Int. Cl.: F24J 2/26, F24J 2/04

(54) **Solar collector**

(30) Priority: 21.11.2011 BE 201100672
(71) Applicant: Barroo, Stefaan Gaston Corneel, 8904 Boezinge (BE)
(72) Inventor: Barroo, Stefaan Gaston Corneel, 8904 Boezinge (BE)
(74) Representative: Hostens, Veerle

(57) **Abstract**

The present invention relates to a solar collector (1) which is simple to produce and comprises an undulated absorption panel (2), having sun-facing main undulations (5) and smaller sun-facing subsidiary undulations (4) and first flow passages (3) which are situated along the absorption panel (2) for allowing a medium to flow between an inlet and an outlet, wherein, to maximize the heat transfer between the absorption panel (2) and the medium, the absorption panel (2) is made from one piece and comprises cavities (4) corresponding to the first flow passages (3), wherein each cavity (4) forms a first flow passage (3) or virtually surrounds it along its periphery and wherein each first flow passage (3) is arranged centrally in the dip between two sun-facing main undulations (5) in a sun-facing subsidiary undulation (6) which delimits the corresponding cavity (4).

## Description

The present invention relates to a solar collector comprising:
- an absorption panel;
- an inlet for supplying a liquid or gaseous medium;
- an outlet for discharging said medium;
- and first flow passages situated along the absorption panel for allowing the medium to flow between the inlet and the outlet.

The present invention also relates to an air-conditioning installation comprising such a solar collector.

As the conventional energy sources are becoming increasingly scarce, it is increasingly necessary to make use of alternative sources of energy. Solar energy is a power source which is still not used to a sufficient degree. The present invention is thus aimed at significantly increasing the possibilities of using solar energy.

Existing solar collectors through which medium flows usually comprise a heat-absorbing surface as absorption panel. A space through which medium flows and which is usually formed by different ducts is then provided on one side of this heat-absorbing surface. Cooler medium flows into the ducts via an inlet, heats up while flowing through said ducts and leaves these ducts via an outlet. After the absorption panel has absorbed the heat to the maximum degree, the heat is transferred to the medium. This heat transfer from the absorption panel to the medium is a limiting factor, because only a portion of heat is transferred from the absorption panel to the medium. Therefore, with these solar collectors, a large proportion of the solar energy is not utilized.

Solar collectors are used to heat different media. The media used are usually air and/or water. With solar collectors which heat a liquid such as water, pipes are arranged under the absorption panel in which the medium can flow. These solar collectors may also form part of air-conditioning installations. An example thereof is described in BE 1018302.

It is an object of the present invention to increase the heat transfer from the absorption panel to the medium which flows through a solar collector.

A partial solution which already offers many advantages, is the solar collector of 'Oel-und Gasfeuerungsbedarf' (OEG). The advantage with this solar collector is that the pipes in which the medium flows are welded to the absorption panel via metal panels which are folded around the pipe. The pipes are not completely round, but are flattened on the side where the pipe touches the absorption panel. In this way, a larger contact surface is created between the pipe and the absorption panel, resulting in a more efficient heat transfer. A drawback of this solar collector by OEG is the fact that its manufacture is quite labour-intensive. Each pipe and/or each pipe part has to be welded to the absorption panel by means of metal panels.

Analogously, FR 2 325 887 A1, EP 1 688 683 A1, DE 195 44 627 A1 and DE 298 20 899 U1 describe solutions in which the efficiency of a solar collector is increased by fitting the pipes which form the first flow passages in cavities which are provided in the absorption panel. The solution from FR 2 325 887 A1 is as labour-intensive as that proposed by OEG, since separate panel parts have to be welded to one another at the location of the pipes. The solutions from EP 1 688 683 A1, DE 195 44 627 A1 and DE 298 20 899 U1 are already less labour-intensive, as the absorption panel consists of one panel and the pipes do not have to be welded to this panel.

In US 4 011 856 A, the pipes which form the first flow passages are welded to the underside of panels which are assembled to form an undulated absorption panel. This solution is again more labour-intensive, since welding has to be carried out for each flow passage. With this solar collector, the heat transfer is increased as a result of the fact that the absorption panel undulates. It is also known from FR 2 325 887 A1, US 5 596 981 A, DE 298 20 899 U1 and EP 0 962 724 A2 that by providing sun-facing undulations in an absorption panel, the efficiency of an absorption panel is increased. It is furthermore known from FR 2 325 887 A1 and EP 0 962 724 that the heat transfer can be increased further by varying the height of the undulations.

It is an object of the present invention to overcome the abovementioned problems of the prior art and to provide a solar collector having an increased heat transfer compared to the abovementioned solar collectors according to the prior art.

This object of the invention is achieved by providing a solar collector, comprising:
- an absorption panel which is substantially configured as an undulated panel comprising sun-facing main undulations which are designed to be directed towards the sun and sun-facing subsidiary undulations which are designed to be directed towards the sun and which are designed to be smaller than the sun-facing main undulations;
- an inlet for supplying a liquid or gaseous medium;
- an outlet for discharging this medium;
- first flow passages situated along the absorption panel for allowing the medium to flow between the inlet and the outlet;
wherein the absorption panel comprises cavities corresponding to the first flow passages and wherein each cavity forms a first flow passage or virtually surrounds a first flow passage along its periphery, wherein the absorption panel is made in one piece and each first flow passage is arranged centrally in the dip between two sun-facing main undulations in a sun-facing subsidiary undulation of the absorption panel which delimits the corresponding cavity.

Due to the fact that cavities are already formed during the production of the absorption panel which can serve as first flow passages or which can surround first flow passages, there is no need for labour-intensive production in which the first flow passages are provided on the absorption panel by means of, for example, welding. The contact surface between the absorption panel and the first flow passages is large, because the flow passage is either surrounded by the absorption panel along virtually its entire length or because the absorption panel itself comprises the cavity which forms the flow passage.

The first flow passages are not necessarily closed spaces. Rather, they may also serve as guide paths for guiding the medium.

In the case of liquid media, the first flow passages are preferably pipes. These pipes are then surrounded by the cavities. The distance between the pipes and the absorption panel is small or nonexistent.

With gaseous media, the cavities themselves may form the first flow passages.

Undulated panels can absorb the light independently from the angle of incidence of the incident light, as a result of which the efficiency of the solar collector is less dependent on the position of the sun.

An even higher efficiency is obtained if each first flow passage arranged centrally in the dip between two sun-facing main undulations is arranged in a sun-facing subsidiary undulation of the absorption panel which delimits the corresponding cavity. The incident light which impinges on the main undulations is reflected onto this subsidiary undulation, as a result of which a large concentration of heat is produced on this subsidiary undulation. The largest heat transfer between absorption panel and medium will thus take place at the location of the subsidiary undulation. Preferably, this subsidiary undulation is coloured black (for example made of black chromium oxide) in order to achieve maximum heat absorption from the heat of incident solar radiation.

In a still more specific preferred embodiment, the solar collector comprises two mirror panels for each first flow passage which extend virtually along the length and virtually along the sides of the corresponding two sun-facing main undulations. These two mirror panels are connected to one another by means of one or more clamps in order to securely clamp these mirror panels to the absorption panel in a releasable way around the sun-facing subsidiary undulation of the corresponding first flow passage. Providing these two mirror panels for each first flow passage produces an additional reflection from the main undulations to the subsidiary undulations, thus further increasing the heat concentration on the subsidiary undulations. This mirror panel may, for example, be made from chromed material or may be coated with chromed material. As an alternative to these mirror panels, absorption panels may be produced in which the main undulations of the absorption panel themselves are made from reflective material, such as for example titanium oxide. Another alternative is to provide a coating of reflective material, such as for example titanium oxide, on the main undulations after the absorption panel has been produced.

The clamps by means of which the mirror panels are detachably clamped around the sun-facing subsidiary undulation are preferably made in black, just as the subsidiary undulations or the entire absorption panel, for example using black chromium oxide, for maximum heat absorption of the heat from the incident solar radiation.

In a preferred embodiment, the absorption panel of the solar collector is designed as a folded metal panel. Metal is a good heat conductor and is able to ensure good heat transfer to the medium.

In a particular preferred embodiment, the solar collector may comprise second flow passages which extend along the absorption panel and allow a gaseous medium to flow through them. In such an embodiment, the solar collector preferably comprises a cooling fin for each cavity which partly extends virtually along the periphery of the cavity and partly extends virtually perpendicularly to the absorption panel and which at least partly delimits two neighbouring second flow passages. The gaseous medium may, for example, be air. The cool air can then be heated via the solar collector. More specifically, the cavities which form the first flow passages by means of access slots to these cavities may be in communication with the second flow passages, the medium in both being the same medium. The second flow passages can also be in communication with each other.

Preferably, each cooling fin partly extends virtually parallel to the absorption panel. As a result thereof, a larger surface is obtained, thus making it possible to transfer yet more heat from the absorption panel to the gaseous medium.

Preferably, with such an embodiment using cooling fins, all cooling fins form part of one folded cooling fin panel. Providing one single panel, for example a metal panel, from which all cooling fins are folded, facilitates production. Installation is also simplified, as it is easier to attach one cooling fin panel than many separate cooling fins to an optional inlet diffuser and/or outlet diffuser, by means of which medium is uniformly distributed across the flow passages from the inlet or is discharged uniformly to the outlet from the flow passages, respectively. By means of the cooling fin panel, a large surface area is obtained for heat transfer.

In a particular embodiment, each first flow passage is of tubular design and each flow passage is at least partly clamped in the cavity of the absorption panel. As a result of the clamps of each first flow passage, there is no need for welding and fitting can be effected in a simple manner.

In a further particular embodiment, each tubular first flow passage is at least partly clamped in a virtually tubular part of a corresponding cooling fin.

In a preferred embodiment, a heat-conducting medium is provided between each tubular first flow passage and the absorption panel or between each tubular first flow passage and the tubular part of the corresponding cooling fin. This heat-conducting medium may, for example, be a medium comprising graphite. Graphite is a good heat conductor, as a result of which the heat transfer between the various parts is increased further.

Furthermore, the absorption panel is preferably directed towards the incident rays of the sun upon installation. In this patent application, the term sun-facing is therefore intended to mean that side of the solar collector or the absorption panel thereof which, in the position of use, faces the sun.

Preferably, a glass panel is fitted at a distance above the absorption panel in order to create a greenhouse effect. This glass panel preferably consists of glass which is sold under the trade name claryl.

A solar collector according to the invention may form part of an air-conditioning installation. More specifically, this air-conditioning installation may also be an air-conditioning installation according to BE 1018302.

The present invention will now be explained in more detail by means of the following detailed description of a few preferred embodiments of solar collectors according to the present invention, an air-conditioning installation comprising such a solar collector and a method for producing such solar collectors according to the invention. The aim of this description is only to give illustrative examples and to indicate further advantages and features of these solar collectors, of this method according to the invention and of this air-conditioning installation, and can therefore not be interpreted as a limitation of the area of application of the invention or of the patent rights defined in the claims.

In this detailed description, reference numerals are used to refer to the attached drawings, in which
- **Fig. 1** shows a cross section of two sun-facing main undulations and one sun-facing subsidiary undulation of an absorption panel for a first embodiment of a solar collector prior to being fitted in the solar collector;
- **Fig. 2** shows a cross section of a part of the first embodiment of a solar collector comprising two sun-facing main undulations and one sun-facing subsidiary undulation of an absorption panel, in which the subsidiary undulation comprises a cavity in which a pipe is provided as a first flow passage;
- **Fig. 3** shows a cross section of a part of the first embodiment of a solar collector comprising two main undulations and one subsidiary undulation of an absorption panel, in which the subsidiary undulation comprises a cavity in which a pipe is provided, and in which the sides of the main undulations are covered by mirror panels;
- **Fig. 4** shows the incident light and the reflection of the incident light on a sun-facing main undulation of an absorption panel of the first embodiment of a solar collector;
- **Fig. 5** shows a clamping pipe for the clamps of a sun-facing subsidiary undulation in perspective;
- **Fig. 6** shows a detail view of an end of the clamping pipe from Fig. 5 in perspective;
- **Fig. 7** shows a top view of two mirror panels and the clamps which are used to attach the mirror panels to the sides of two sun-facing main undulations of the absorption panel, adjacent to an identical first flow passage;
- **Fig. 8** shows a perspective view of the mirror panels from Fig. 7 and the clamps which are used to attach the mirror panels to two sun-facing main undulations of the absorption panel, adjacent to an identical first flow passage;
- **Fig. 9** shows a cross section of a part of the first embodiment of a solar collector with a first type of cooling fins;
- **Fig. 10** shows a detail view of the cooling fins from the solar collector from Fig. 9;
- **Fig. 11** shows a perspective view of the solar collector from Fig. 9;
- **Fig. 12** shows a cross section of the part of the embodiment from Fig. 9, with a clamping pipe around one of the sun-facing subsidiary undulations;
- **Fig. 13** shows a cross section of the part of the embodiment from Fig. 12, without pipes as flow passages;
- **Fig. 14** shows a cross section of a part of the first embodiment of a solar collector with a second type of cooling fins;
- **Fig. 15** shows a detail view of a cooling fin from the solar collector from Fig. 12;
- **Fig. 16** shows a cross section of a part of the first embodiment of a solar collector with a third type of cooling fins;
- **Fig. 17** shows a detail view of a cooling fin from the solar collector from Fig. 14;
- **Fig. 18** shows a cross section of a part of a possible absorption panel for a second embodiment of a solar collector prior to installation thereof in the solar collector;
- **Fig. 19** shows a cross section of a part of the second embodiment of a solar collector comprising two sun-facing main undulations of an absorption panel, in which a pipe is clamped in the dip between the main undulations as a flow passage in a sun-facing subsidiary undulation;
- **Fig. 20** shows a cross section of a part of a possible absorption panel for a third embodiment of a solar collector prior to installation thereof in the solar collector;
- **Fig. 21** shows a cross section of a part of the third embodiment of a solar collector comprising two sun-facing main undulations of an absorption panel, in which a pipe is clamped in the dip between the main undulations as a flow passage in a sun-facing subsidiary undulation;
- **Fig. 22** shows an absorption panel of the first embodiment of a solar collector with a pipe system, in which the flow passages are connected to each other by means of bends;
- **Fig. 23** shows an absorption panel of the first embodiment of a solar collector with a pipe system, in which the flow passages are mutually connected to a transverse duct;
- **Fig. 24** shows a cross section of a first solar collector according to the present invention;
- **Fig. 25** shows a cross section of a second solar collector according to the present invention;
- **Fig. 26** shows a cross section of a third solar collector according to the present invention.

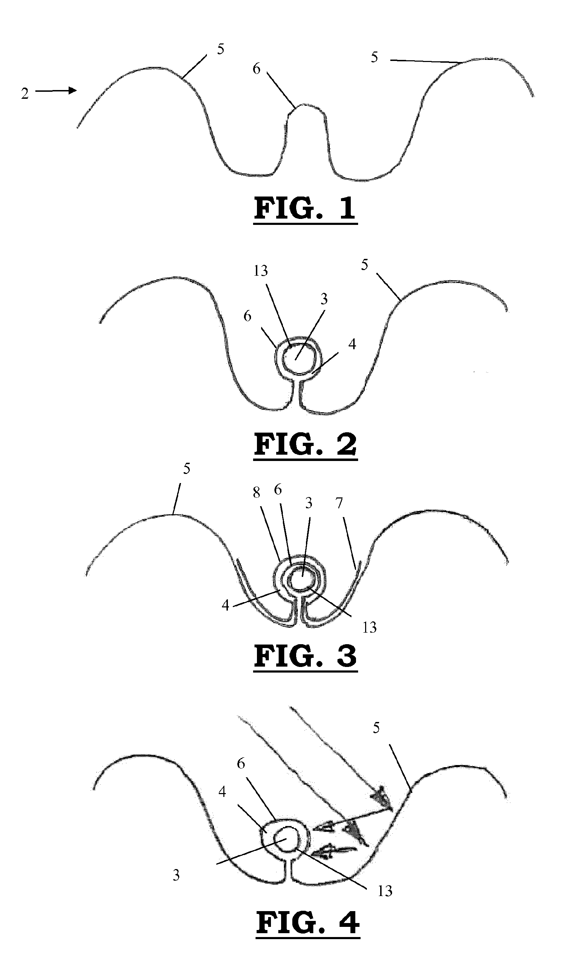

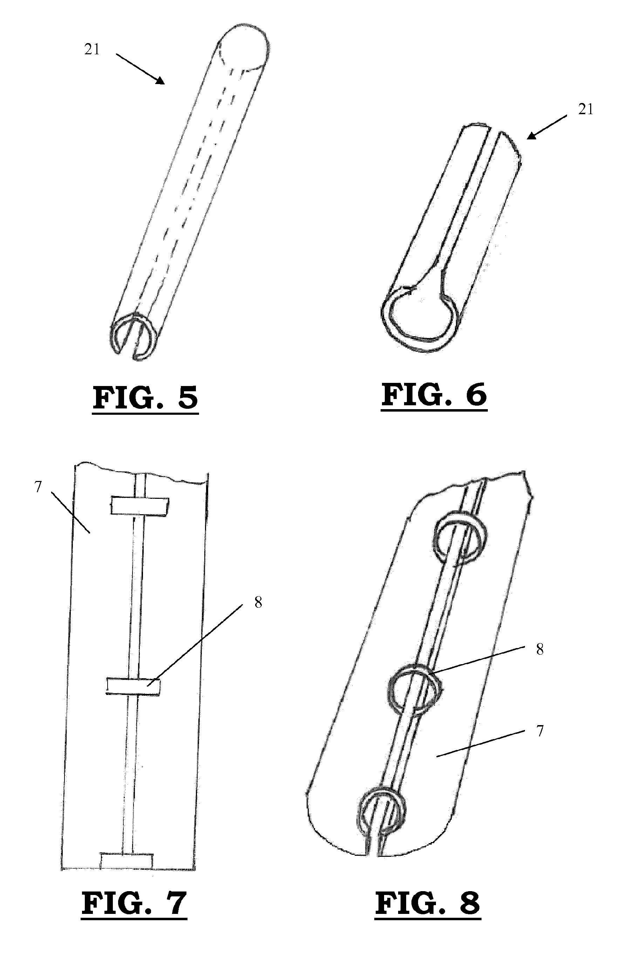

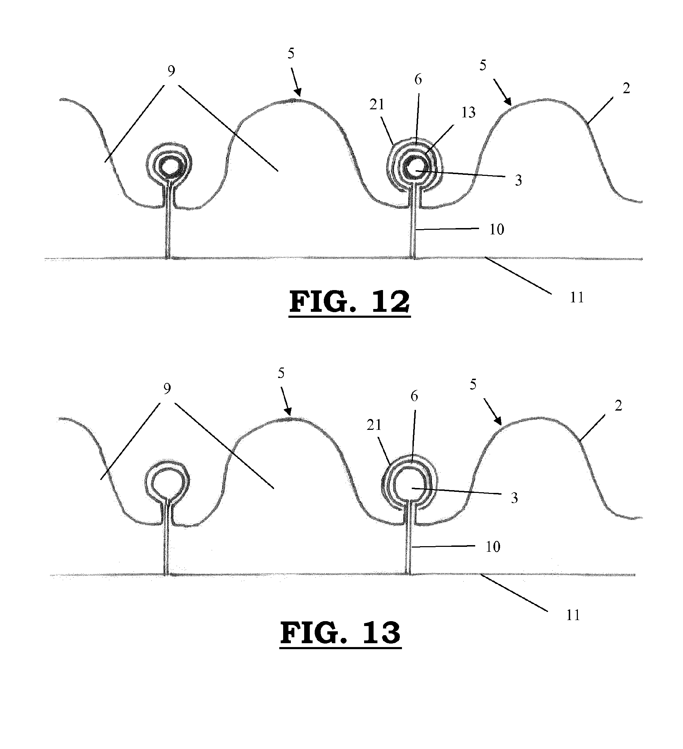

A solar collector (1) according to the invention comprises an absorption panel (2) which consists of a heat-conducting substance, such as metal. According to a first embodiment, the solar collector (1) comprises an undulating absorption panel (2) (corrugated panel), as is illustrated in Fig. 1. The corrugated panel (2) consists of alternating large and smaller undulations. The large undulations form the sun-facing main undulations (5), the smaller undulations form the subsidiary undulations (6). During the manufacture of the solar collector (1), the subsidiary undulation (6) of the absorption panel (2) is clamped together, so that a cavity (4) is formed. This may, for example, also be clamped together by means of a clamping pipe (21), as is illustrated with the right-hand subsidiary undulations (6) in Figs. 12 and 13. Such a clamping pipe (21) is also shown separately in Figs. 5 and 6. Such a clamping pipe (21) can be pushed onto the subsidiary undulation (6) or can be pressed onto it, starting from a panel. Alternatively, the absorption panel (2) can, for example, be welded after the cavity (4) has been formed. In the absence of a pipe (13) in this cavity (4), as in the embodiment from Fig. 13, said cavity (4) serves as a first flow passage (3). If a pipe (13) is present in said cavity (4) (other illustrated embodiments), the pipe (13) serves as a first flow passage (3). The subsidiary undulation (6) may be clamped together either completely or partly. In the figures, a pipe (13) is present in the cavity (4), in which a medium flows, such as water/air. In this way, hot water or hot air can be generated.

The clamping of the subsidiary undulation (6) may be carried out in such a way that the pipe (13) which is situated in the cavity (4) which has been produced, touches the absorption panel (2) or there may still be some space between the pipe (13) and the absorption panel (2). The pipe (13) is preferably made from a good heat conductor. If there is still some space present between the pipe (13) and the absorption panel (2), this is preferably filled with a good heat conductor, such as for example graphite.

In order to increase the efficiency of the solar collector (1) with an absorption panel (2) as illustrated in the Figs. 1-4, 9, 11-14 and 16, comprising sun-facing subsidiary undulations (6) which are arranged between sun-facing main undulations (5), a mirror panel (7) (as illustrated in Figs. 7-8) is provided on the sides of each sun-facing main undulation (5) of the absorption panel (2) directed towards the subsidiary undulations (6), as is shown in Fig. 3. This mirror panel (7) is held securely on the absorption panel (2) by means of several clamps (8). The clamps (8) are placed over the subsidiary undulation (6) and thus fix the mirror panels (7) securely to the main undulations (5).

Without the mirror panel (7), a part of the sunlight which impinges on the sides of the sun-facing main undulations (5) is already reflected towards the sun-facing subsidiary undulation (6), as is illustrated in Fig. 4. The mirror panel (7) reflects even better the rays of light which impinge on the sides of the sun-facing main undulation (5) onto the subsidiary undulation (6). No mirror panel (7) is placed on the subsidiary undulation (6), as absorption of the reflected rays of light takes place there, since maximum heat absorption is desired there. The subsidiary undulation (6) contains a light-absorbing layer or is made from a light-absorbing substance. This light-absorbing layer or substance may be, for example, black chromium oxide. For the sake of simplicity, the entire absorption panel may be executed in this way. The clamps (8) which are used to clamp the mirror panel (7) to this subsidiary undulation (6) preferably also comprise such a light-absorbing layer or are preferably made from such a light-absorbing substance. The mirror panel (7) itself may, for example, be made of chromed material or may be coated with chromed material.

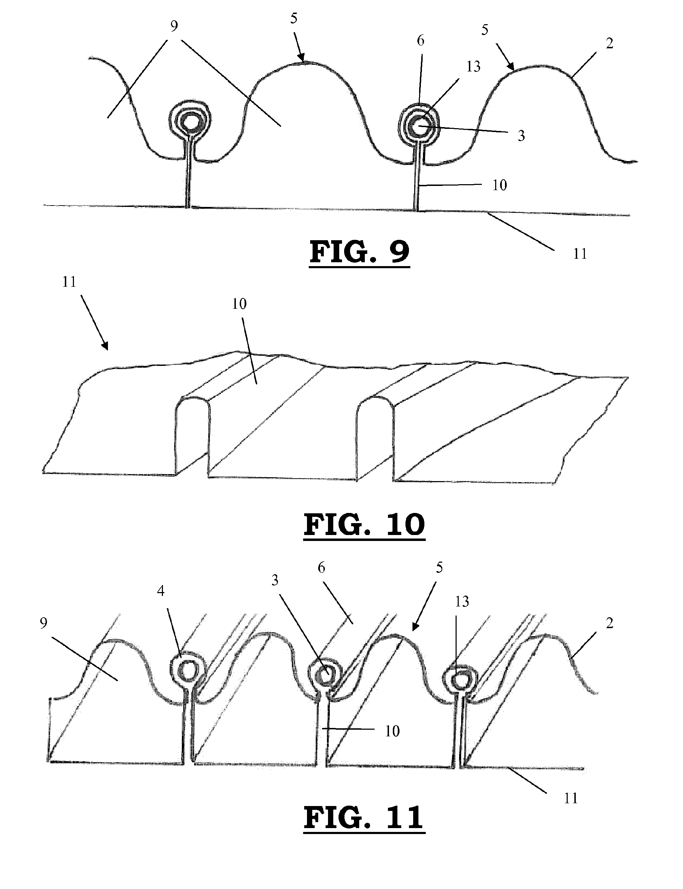

A solar collector (1) may also be provided with second flow passages (9) in addition to the first flow passages (3). In these second flow passages (9), the same medium as that in the first flow passages (3) may be heated or a second medium may be heated. In Figs. 9 and 11-13, these second flow passages (9) are clearly illustrated. They are provided here for the passage of air. In order to be able to transfer maximum heat from the absorption panel (2) to the air in these second flow passages (9), the solar collectors (1) may be provided with cooling fins (10), as illustrated in Figs. 9 to 17. These cooling fins (10) may, for example, be made of sheet metal.

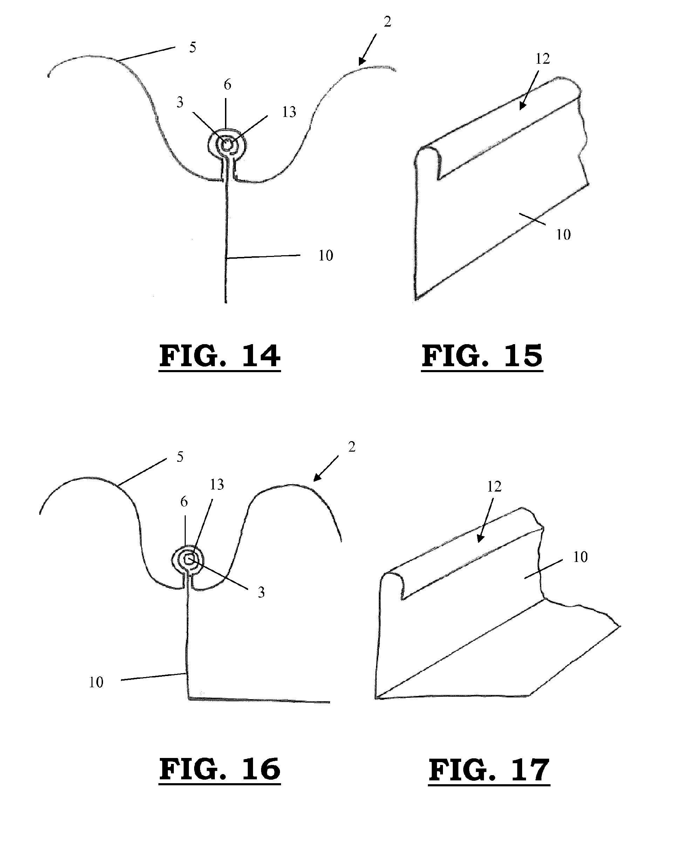

Figs. 9 to 17 illustrate solar collectors (1) from the first embodiment with cooling fins (10) and these cooling fins (10) are also illustrated in more detail. In order to facilitate production, the cooling fins (10) in Figs. 9 to 13 form part of one and the same cooling fin panel (11) which is shown separately prior to assembly in Fig. 10. This cooling fin panel (11) is folded around the pipes (13) when the absorption panel (2) is being formed. Figs. 14 and 15 separately show cooling fins (10) which are fixed around the pipe (13) in the absorption panel (2) for each cavity (4) and which for the remainder extend virtually perpendicular to the absorption panel (2). In order to be able to install it, an end (12) of this cooling fin (10) is bent, as can be seen in Fig. 15, in order to be able to initially fit this around the pipe (13). During installation, this bent part (12) of the cooling fin (10) is clamped around the pipe (13) together with the absorption panel (2), as can be seen in Fig. 14. Figs. 16 and 17 also show separate cooling fins (10) which can be fixed in the same way as the cooling fins (10) from Figs. 14 and 15. These cooling fins (10) are fitted around the pipe (13) in the absorption panel (2) for each cavity (4). In addition to the part of the cooling fin (10) which extends virtually perpendicularly to the absorption panel (2), these cooling fins (10) furthermore comprise a part which extends virtually parallel to the absorption panel (2) in order to increase the heat transfer still further.

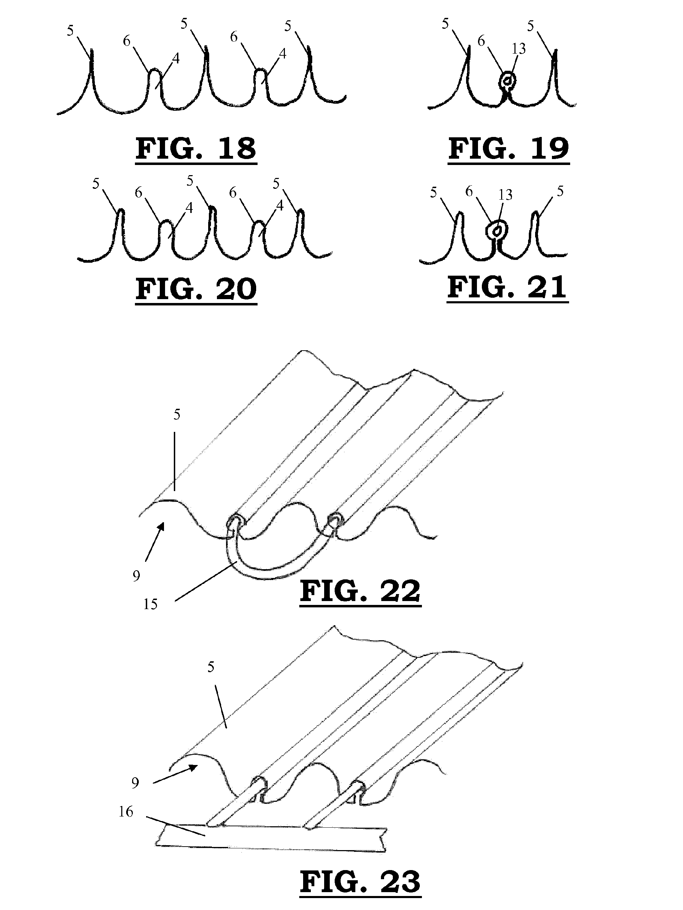

Figs. 18 to 21 show absorption panels (2) from second and third embodiments of the solar collector (1). The absorption panel (2) of the solar collector (1) of these embodiments in each case has a different shape than the absorption panel (2) of the first embodiment. Figs. 18 and 20 show these absorption panels (2) in each case before the pipes (13) were clamped in the sun-facing subsidiary undulations (6) as flow passages (3), while Figs. 19 and 21 show these absorption panels (2) with pipes (13) clamped in the sun-facing subsidiary undulations (6). In the second embodiment, the sun-facing main undulations (5) are of a pointed design. In the third embodiment, the sun-facing main undulations (5) are of a more pointed design than the sun-facing main undulations (5) from the first embodiment, but less pointed than the sun-facing main undulations (5) from the second embodiment.

Figs. 22 and 23 show two possible forms of pipe systems which are present in solar collectors (1) according to the invention. In Fig. 22, the pipes (13) of the pipe system comprise bends (15) between the various cavities (4). In Fig. 23, the pipe system consists of an inlet pipe (16) for the medium, several pipes (13) are connected to this inlet pipe (16) which are situated in the cavities (4) of the solar collector (1) and each of said pipes (13) is connected to an outlet pipe (not shown in Fig. 23). Alternatively, the pipes (13) may, for example, also be attached to each other using T-pieces.

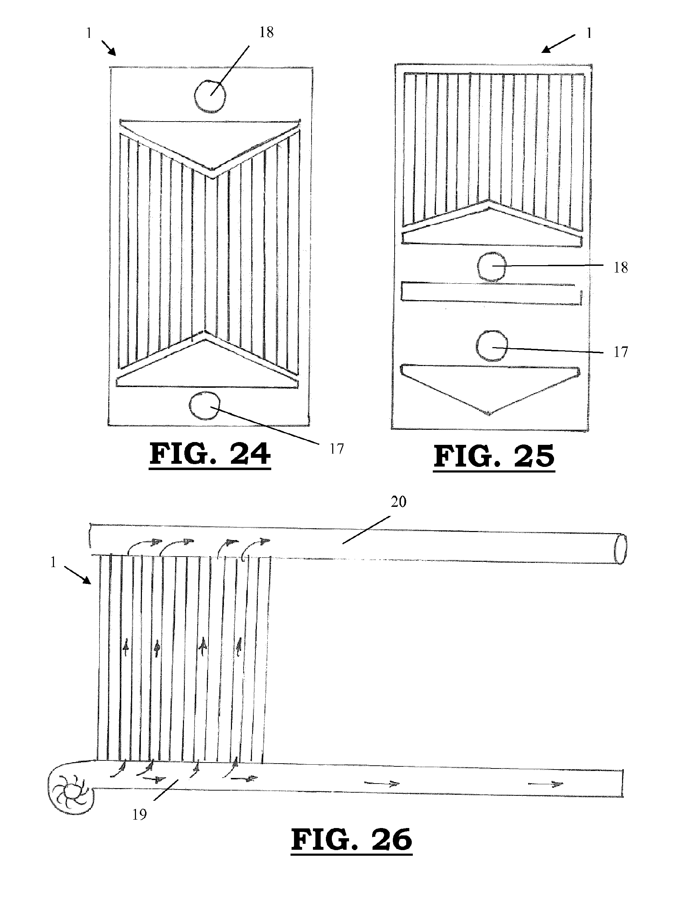

Figs. 24, 25 and 26 show various possible forms of solar collectors (1). Figs. 24 and 25 show panels which can be mass-produced, for example using standard dimensions, and can then be fixed to a desired panel. Fig. 26 shows a solar collector (1) which can be tailor-made to extend, for example, along an entire sun-facing façade. Fig. 26 shows the direction of flow of a medium in the pipe system of the solar collector (1).

Cold air flows into the solar collector (1) via the air inlet (17) and hotter air flows to the outside via the air outlet (18). The air is heated by means of the solar collector (1). The colder air comes into contact with the absorption panel (2) which absorbs heat from solar radiation and consequently heats up. In this way, hotter air can flow out of the solar collector (2). With a solar collector (1) which only serves to heat up air, the presence of pipes (13) in the cavities (4) of the solar collector (1) is not necessary and the cavity (4) itself can form the first flow passage (3).

If, in addition to hot air, hot water is also desired, a pipe (13) with water is present in the cavity (4) in order to be able to also produce hot water in this way. Air can then be heated additionally by means of second flow passages (9) and then flows onto the locating underneath the absorption panel (2) where the pipe (13) is not present. The solar collector (1) furthermore preferably comprises a glass panel at a certain distance from the absorption panel (2) in order to create a greenhouse effect.

The solar collectors (1) according to the invention (and preferably the solar collector (1) according to the first embodiment) can be used in air-conditioning installations.

An endless number of different variants of solar collectors (1) according to the invention can be produced.

A first type of panel (1) may, for example, comprise the first-described embodiment of an absorption panel (2), provided with mirror panels (7), but without cooling fins (10). This first type of panel (1) may comprise pipes (13) as flow passages (3) and only be used to heat liquids. This first type of panel (1) then serves as a known thermal panel, but has a greater efficiency as a result of the mirror effect and is in addition easier to produce.

A second type of panel (1) may, for example, be provided with the described cooling fins (10) to heat up only air, in which additional efficiency is achieved due to the design and the cooling fins (10).

A third type of panel (1) may, for example, be provided to heat up both liquids and air. In winter, when the panel gives off heat below 30 or 35 degrees, this heat can no longer be used efficiently to heat up liquids. It is, however, possible to produce hot air from 24 degrees in order to heat up a room in this way. When the absorption panel (2) becomes hotter, it is also possible, for example, to store heated liquids in a boiler.

It is clear that endless variants according to the invention can be produced.

## Claims

1. Solar collector (1), comprising:
- an absorption panel (2) which is substantially configured as an undulated panel comprising sun-facing main undulations (5) which are designed to be directed towards the sun and sun-facing subsidiary undulations (6) which are designed to be directed towards the sun and which are designed to be smaller than the sun-facing main undulations (5);
- an inlet for supplying a liquid or gaseous medium;
- an outlet for discharging this medium;
- first flow passages (3) situated along the absorption panel (2) for allowing the medium to flow between the inlet and the outlet;
wherein the absorption panel (2) comprises cavities (4) corresponding to the first flow passages (3), wherein each cavity (4) forms a first flow passage (3) or virtually surrounds a first flow passage (3) along its periphery, **characterized in that** the absorption panel (2) is made in one piece and each first flow passage (3) is arranged centrally in the dip between two sun-facing main undulations (5) in a sun-facing subsidiary undulation (6) of the absorption panel (2) which delimits the corresponding cavity (4).

2. Solar collector (1) according to Claim 1, **characterized in that** said solar collector (1) comprises mirror panels (7) which are arranged at least partly on the sides of the sun-facing main undulations (5) adjacent to each first flow passage (3).

3. Solar collector (1) according to Claim 2, **characterized in that** the solar collector (1) comprises two mirror panels (7) for each first flow passage (3) which extend virtually along the length and virtually along the sides of the corresponding two sun-facing main undulations (5), wherein these two mirror panels (7) are connected to one another by means of one or more clamps (8) in order to securely clamp these mirror panels (7) to the absorption panel (2) in a releasable way around the sun-facing subsidiary undulation (6) of the corresponding first flow passage (3).

4. Solar collector (1) according to one of the preceding claims, **characterized in that** the absorption panel (2) is designed as a folded metal panel.

5. Solar collector (1) according to one of the preceding claims, **characterized in that** said solar collector comprises second flow passages (9) which extend along the absorption panel (2) and allow a gaseous medium to flow through them, and **in that** the solar collector (1) comprises a cooling fin (10) for each cavity (4) which partly extends virtually along the periphery of the cavity (4) and partly extends virtually perpendicularly to the absorption panel (2) and which at least partly delimits two neighbouring second flow passages (9).

6. Solar collector (1) according to Claim 5, **characterized in that** each cooling fin (10) partly extends virtually parallel to the absorption panel (2).

7. Solar collector (1) according to Claim 5 or 6, **characterized in that** all cooling fins (10) form part of one folded cooling fin panel (11).

8. Solar collector (1) according to one of the preceding claims, **characterized in that** each first flow passage (3) is of tubular design and is at least partly clamped in the cavity (4) of the absorption panel (2).

9. Solar collector (1) according to Claim 8 and one of Claims 6 to 7, **characterized in that** each tubular first flow passage (3) is at least partly clamped in a virtually tubular part of a corresponding cooling fin (10).

10. Solar collector (1) according to Claim 8 or 9, **characterized in that** a heat-conducting medium is provided between each tubular first flow passage (3) and the absorption panel (2) or the tubular part of the corresponding cooling fin (10).

11. Air-conditioning installation comprising a solar collector (1) according to one of the preceding claims.
